Europäisches Patentamt

European Patent Office

Office européen des brevets

(11) Publication number: **0 131 674**
**A1**

(12) **EUROPEAN PATENT APPLICATION**

(21) Application number: **83830146.3**

(22) Date of filing: **15.07.83**

(51) Int. Cl.⁴: **B 62 D 3/12**

(43) Date of publication of application:
**23.01.85 Bulletin 85/4**

(84) Designated Contracting States:
**AT BE CH DE FR GB LI LU NL SE**

(71) Applicant: **I.DE.A. S.p.A.**
**Via Ferrero di Cambiano 32**
**I-10024 Moncalieri Torino(IT)**

(72) Inventor: **Colucci, Mario**
**Corso Marche 6**
**I - 10146 Torino(IT)**

(74) Representative: **Buzzi, Franco et al,**
**c/o Jacobacci-Casetta & Perani S.p.A. Via Alfieri, 17**
**I-10121 Torino(IT)**

(54) **Steering system for vehicles.**

㊼ A steering system for vehicles in which a toothed pinion (32) rotated by a steering shaft (18) meshes with a rack (34) carried by a steering rod (36) disposed transverse the steering shaft and connected to the steered wheels. The distance from the zone of mutual meshing of the toothed pinion (32) and the rack (34) from the centre of rotation (B) thereof decreases progressively from a maximum value corresponding to the neutral position of the steered wheels to two minimum values corresponding to the two positions of maximum steering of the steered wheels, whereby the force required on the steering wheel reduces progressively as the angle of steering of the wheels increases.

FIG. 2

- 1 -

"Steering system for vehicles"

The present invention relates to steering systems for vehicles having a pair of wheels steerable between a neutral position and two opposing positions of maximum steering.

In particular, the invention relates to a steering system of the type comprising a steering wheel which rotates a steering shaft, a toothed drive pinion driven by the steering shaft, a steering rod extending transverse the steering shaft and carrying a rack which meshes with the said toothed pinion, and a pair of steering track rods which articulate the ends of the steering rod to the steered wheels.

Steering systems of this type are widely used in motor vehicles by reason of their economy of manufacture and simplicity of operation.

However, such systems, in which the drive pinion is generally coupled for rotation coaxially with the steering shaft, involve the user having to exert considerable physical force on the steering wheel in order to steer the wheels, particularly during low speed manoeuvres or with the vehicle stopped, for which high angles of steering are necessary, requiring several complete revolutions of the steering wheel and the steering shaft.

These disadvantages have been overcome until now solely by recourse to power-assisted steering systems having auxiliary pneumatic or hydraulic servo-systems which are evidently both complex and expensive.

An object of the present invention is thus the avoidance of the said disadvantages, by providing a vehicle steering system of the type specified above the conformation of which is such as to provide an appreciable reduction in the force required on the steering wheel to operate the steering, particularly in the case of manoeuvres for which high steering angles are needed.

A further object of the invention is to provide a steering system of the type specified above in which the reduction in the steering force increases progressively with increase in the steering angle of the steered wheels.

A further object of the invention is to provide a steering system of the type specified above which is in effect an exclusively mechanical servo-system, without the assistance of pressurised fluid.

Another object of the invention is to provide a steering system of the type specified above which can be manufactured simply and economically, which is easy and rapid to assemble and safe and reliable in operation.

With the aforesaid objects in view, the present invention provides a vehicle steering system of the type previously defined, characterised in that the distance between the zone of mutual meshing of the rack and the toothed drive pinion from the axis of rotation (B) of the toothed drive pinion progressively decreases from a maximum value corresponding to the neutral position of the steered wheels to two minimum values corresponding to the said positions of maximum steering of the steered wheels.

This solution provides a servo-steering system which is completely mechanical and which affords a progressive reduction in the force required on the steering wheel as the steering angle of the steered wheels increases. In the neutral position, and close to this position, the force on the steering wheel corresponds essentially to that which is required for conventional steering systems of the rack and pinion type, while this force reduces towards the maximum steering positions to values even less than those which are afforded by pneumatic or hydraulic servo-assisted steering systems.

According to a preferred embodiment of the invention, the drive pinion rotates eccentrically relative to the steering shaft and the rack has an arcuate pitch line which is concave towards the toothed drive pinion.

This pitch line normally has the form of half a sine wave.

Normally the steering system according to the invention further includes a reduction gear interposed between the steering shaft and the toothed drive pinion, and arranged to achieve a reduction ratio such that the rotation of the steering shaft necessary to move from the neutral position to one or the other of the respective maximum steering positions of the steered wheels corresponds to a maximum rotation of the toothed drive pinion through half a revolution in one sense or in the opposite sense respectively.

Further characteristics and advantages of the invention will become apparent in the course of the detailed description which follows, with reference to the appended drawings, provided purely by way of non-limiting example, in which:

Figure 1 is a schematic sectional view of a part of a steering system for motor vehicles according to the invention;

Figure 2 is a sectional view on a reduced scale taken on line II-II .of Figure 1 with the steering system in the position of maximum steering, and

Figure 3 is a schematic view corresponding to Figure 2 with the steering system in the neutral position.

The steering system according to the invention comprises essentially a casing or steering box 10 having a frontal tubular boss 12 and two lateral tubular bosses 14 disposed opposite each other and perpendicular to the boss 12.

One end of a steering shaft 18 is inserted in the boss 12 and is supported by means of rolling bearings 16, the other end of this shaft being attached to a steering wheel, not shown. To the said one end of the steering shaft 18 there is keyed a cylindrical toothed sprocket 20 which meshes with an internally toothed crown 22 (or externally toothed crown in an embodiment not illustrated) of a wheel 24 keyed to a support shaft 26 parallel to the steering shaft 28. The ends of the support shaft 26 are supported for rotation by internal tubular projections 28, 30 of the box 10.

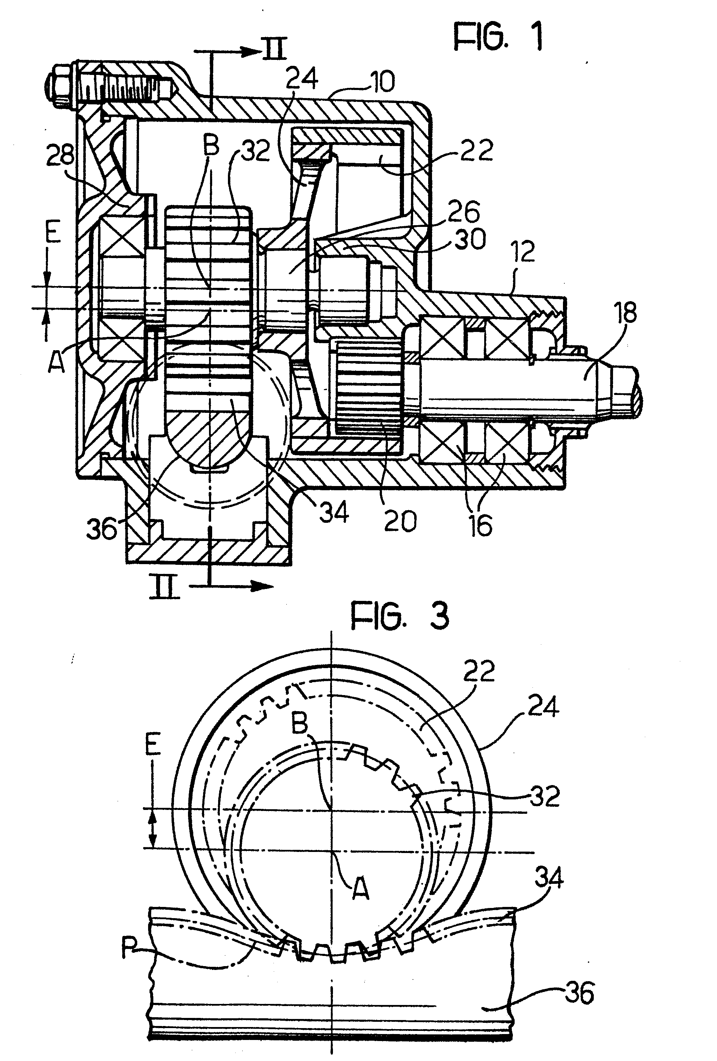

On the support shaft 26 there is also keyed a toothed cylindrical drive pinion 32 disposed eccentrically relative to the shaft 26 and hence relative to the wheel 24. The eccentricity is indicated by E in Figures 1 and 3, in which A and B indicate respectively the axes of the pinion 32 and the shaft 26 (or the wheel 24).

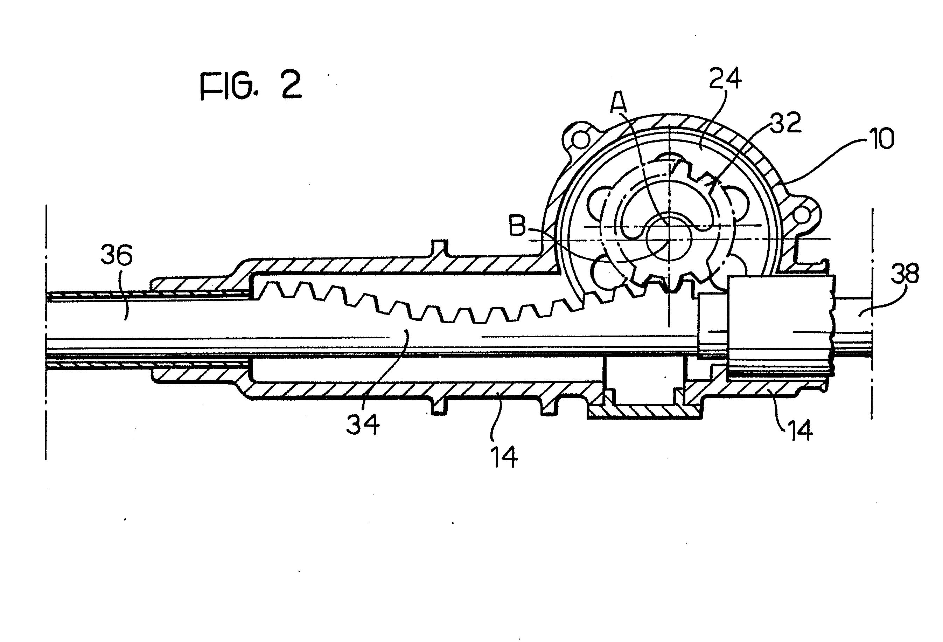

The toothed pinion 32 meshes with a rack 34 formed on a steering rod 36 disposed perpendicular to the steering shaft 18 and mounted for sliding movement through the steering box 10, within the lateral tubular bosses 14. The ends of the steering rod 36 are connected to respective steering track rods, only one of which is shown schematically at 38 in Figure 2, which are in their turn articulated to the steered wheels, not illustrated, of the vehicle.

As is clearly seen in Figure 3, the rack 34 has an arcuate pitch line P in the form of half a sine wave, which is concave towards the toothed drive pinion 32.

Naturally the profile of the pitch line P is such as to ensure the correct meshing of the pinion 32 in any angular position thereof relative to the axis of rotation B.

In the condition of the steering system illustrated in Figures 1 and 3, corresponding to the neutral position of the steered wheels of the vehicle, the drive pinion 32 engages the lowermost central zone of the rack 34, with its axis A interposed between the axis of rotation B of the shaft 26 and the zone of meshing of the pinion 32 and the rack 34.

From this condition, a rotation imparted to the steering shaft 18 in one sense or in the other by means of the steering wheel rotates the wheel 24 through the reduction gear constituted by the gears 20 and 22, rotating the drive pinion 32 about the axis B and thus causing translational movement of the rack 34 and of the steering rod 36 in one direction or in the opposite direction so as to steer the steered wheels of the vehicle to one side or to the opposite side.

By virtue of the eccentricity of the drive pinion 32 relative to the wheel 24 and the arcuate form of the rack 34, the lever arm with which the steering force imparted to the steering shaft 18 is transmitted to the steering rod 36 reduces progressively as the steering angle of the wheels increases, so as to reduce progressively the force required on the steering wheel itself progressively. This force is clearly a minimum at the positions of maximum steering of the wheels in one sense or in the other, one of which is illustrated in Figure 2. As is seen in this Figure, the drive pinion 32 meshes with one of the higher ends of the rack 34 and its axis A is disposed in a position almost diametrally opposite that assumed in the neutral position illustrated in Figure 3.

It should also be noted that the reduction ratio achieved by means of the reduction gear defined by the gears 20 and 22 is such that the rotation of the steering shaft 18 (and hence of the steering wheel) needed to move from the neutral position to one or the other of the respective positions of maximum steering of the steered wheels corresponds to a maximum rotation of the drive pinion 32 through half a revolution in one sense or in the opposite sense respectively.

It will be clear from what has been said above that the device according to the invention allows a servo-steering effect to be achieved by completely mechanical means which are extremely simple and economical, and safe and reliable in operation, by virtue of which the force which the driver needs to exert on the steering wheel is considerably reduced. It should also be noted that, in contrast to conventional power-assisted steering systems which involve pressurised fluid servo mechanisms, the servo assisted action achieved by the steering system according to the invention is more direct and for a driver more precise for small angles of steering of the wheels, while as the steering angle approaches the maximum allowed the servo action increases progressively. Therefore the servo assisted action is practically imperceptible during normal running of the vehicle while it is considerable in the case, for example, of parking manoeuvres which require several complete rotations of the steering wheel.

CLAIMS

1. A steering system for vehicles having a pair of wheels steerable between a neutral position and two positions of maximum steering, comprising a steering shaft (18) rotatable by a steering wheel, a toothed drive pinion (32) driven by the steering shaft and having an axis of rotation (B), a steering rod (36) which extends transverse the steering shaft, a rack (34) which is carried by the steering rod (36) and engages the said toothed pinion (32) in a zone of mutual meshing, and a pair of steering track rods (38) which articulate the ends of the steering rod (36) to the steered wheels, characterised in that

the distance between the zone of mutual meshing of the rack (34) and the toothed drive pinion (32) from the axis of rotation (B) of the toothed drive pinion (34) progressively decreases from a maximum value corresponding to the neutral position of the steered wheels to two minimum values corresponding to the said positions of maximum steering of the steered wheels.

2. Steering system according to Claim 1, characterised in that the toothed drive pinion (32) rotates eccentrically relative to the steering shaft (18), and in that the rack (34) has an arcuate pitch line (P) which is concave towards the toothed drive pinion (32).

3. Steering system according to Claim 2, characterised in that the pitch line (P) of the rack (34) has a profile substantially in the form of half a sine wave.

4. Steering system according to Claim 2, characterised in that it includes a reduction gear (20, 22) interposed between the steering shaft (18) and the toothed drive pinion (32) and arranged to achieve a reduction ratio such that the rotation of the steering shaft (18) necessary to move from the said neutral position to one or the other of the respective maximum steering positions of the steered wheels corresponds to a
maximum rotation of the toothed drive pinion (32)
through half a revolution in one sense or in the
opposite sense respectively.

5. Steering system according to Claim 4, characterised
in that the reduction gear includes a toothed sprocket
(20) coaxial with the steering shaft (18) and a gear
wheel (22) meshing with the sprocket (20), the said
toothed drive pinion (32) being fixed eccentrically
to the gear wheel (22) for rotation therewith.

0131674

1/2

FIG. 1

FIG. 3

FIG. 2

**0131674**
Application number

European Patent
Office

**EUROPEAN SEARCH REPORT**

EP  83 83 0146

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | EP-A-0 047 017  (NISSAN MOTOR CO. LTD.) * Claim 1; figures 1-3 * | 1 | B 62 D    3/12 |
| Y | Patent Abstracts of Japan vol. 5, no. 33, 28 February 1981 & JP-A-55-159356 | 1,2 | |
| Y | US-A-2 973 658  (A.E. BISHOP) * Claims 1, 2; column 3, line 69 - column 4, line 2; column 4, lines 34-50; figure 1 * | 1,2 | |
| A | US-A-3 267 763   (H.E. MERRITT) * Claims 1, 2; column 1, lines 1-35; column 5, lines 51-63; figures 5, 6 * | 1,4,5 | |
| A | GB-A-2 030 262  (ADWEST ENGINEERING LTD.) * Claims 1, 7; page 2, line 126 - page 3, line 18; figures 4, 5 * | | TECHNICAL FIELDS SEARCHED (Int. Cl ³)  B 62 D    3/12  F 16 H   19/00 |
| A | Patent Abstracts of Japan vol. 5, no. 33, 28 February 1981 & JP-A-55-159355 | | |
| A | Patent Abstracts of Japan vol. 5, no. 72, 14 May 1981 & JP-A-56-21968 | | |

The present search report has been drawn up for all claims

| Place of search BERLIN | Date of completion of the search 03-02-1984 | Examiner PETTI P |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82